# EUROPÄISCHE PATENTSCHRIFT

(11) **EP 1 589 309 B1**
(45) Veröffentlichungstag und Bekanntmachung des Hinweises auf die Patenterteilung: **05.11.2008**
(21) Anmeldenummer: 05008214.8
(22) Anmeldetag: 14.04.2005
(51) Int. Cl.: F25D 3/11, F25D 25/04, A23L 3/36, B65G 15/62

(54) **Vorrichtung zur Behandlung von Lebensmitteln mit einem Transportband**
Device for the treatment of foodstuffs having a conveyor
Dispositif pour la préparation de produits alimentaires avec un convoyeur

(30) Priorität: 22.04.2004 DE 102004020195
(43) Veröffentlichungstag der Anmeldung: 26.10.2005
(73) Patentinhaber: Linde Aktiengesellschaft, 80807 München (DE)
(72) Erfinder: Kamm, Volker, 85764 Oberschleissheim (DE)

(56) Entgegenhaltungen:
- EP-A- 0 479 516
- US-A- 3 938 350
- US-A- 4 989 723
- US-B1- 6 523 679

## Beschreibung

Die Erfindung betrifft eine Vorrichtung zur Behandlung von Lebensmitteln mit einer Behandlungszone, in der ein Transportband zum Fördern der Lebensmittel durch die Behandlungszone angeordnet ist, wobei das Transportband durch ein Gestell unterstützt ist und auf dem Gestell aus reibungsarmem Kunststoff bestehende Gleitschienen angebracht sind, über die das Transportband geführt ist.

Zur Behandlung von Lebensmitteln, insbesondere zum Kühlen und/oder Gefrieren von Lebensmitteln, werden häufig Einrichtungen verwendet, bei denen die Lebensmittel durch eine Behandlungszone, z. B. einen gekühlten Raum befördert werden. Weit verbreitet sind beispielsweise so genannte Tunnelfroster, bei denen die Lebensmittel durch ein tunnelartig ausgebildetes Gehäuse befördert werden, in dem ein Kühlmittel, insbesondere ein Flüssiggas wie z. B. flüssiger Stickstoff, auf die Lebensmittel gesprüht wird. Zum Fördern der Lebensmittel durch den Tunnelfroster wird üblicherweise ein Transportband eingesetzt, auf welchem die Lebensmittel kontinuierlich durch den Tunnelfroster bewegt werden und dabei kühlen bzw. gefrieren. Solche Transportbänder weisen gewöhnlich eine Breite z. B. zwischen 200 und 2000 mm auf. Die Transportbänder sind bei der Führung durch den Tunnelfroster in Folge des Eigengewichtes und und des Gewichts der auf dem Transportband befindlichen Lebensmittel mechanisch von unten zu unterstützen. Zur Unterstützung dient ein Gestell aus Rohren und/oder Trägern und/oder Blechen. Um die Reibung zwischen Transportband und Gestell zu minimieren, sind am Gestell längs zur Laufrichtung des Transportbandes Gleitschienen z. B. aus Kunststoff angebracht, über die das Transportband geführt wird. Die Gleitschienen sind auf dem Gestell befestigt, wobei bei den bisherigen Ausführungsformen immer ein Spalt zwischen Kunststoffgleitschienen und Metallgestell entsteht. Üblicherweise werden bislang U-förmige Kunststoffgleitschienen auf einen Flachstahl aufgeschoben. Die dabei zwangsläufig auftretenden Spalträume stellen in der Lebensmitteltechnik jedoch ein Hygieneproblem dar. In den Spalträumen sich ansammelnde Lebensmittelteile können zu unerwünschten Bakterienherden werden.

In der Patentschrift US 6523679 wird eine gattungsgemäße Vorrichtung offenbart, bei der selbsttragende, aus Kunststoff bestehende Gleitschienen auf drei Stützstellen aufliegen.

Der vorliegenden Erfindung liegt daher die Aufgabe zugrunde, eine Vorrichtung der eingangsgenannten Art derart auszugestalten, dass auch hohe Hygieneanforderungen erfüllt werden können.

Diese Aufgabe wird erfindungsgemäß durch die Merkmale des Anspruchs 1 gelöst.

Die Gleitschienen werden also nicht mehr auf z. B. Flachstahl aufgesteckt, sondern bilden separate, selbsttragende Elemente. Spalte, die z. B. beim Kontakt von Kunststoff und Metall entstehen, können auf diese Weise minimiert werden. Außerdem kann der Zeitaufwand für Installation, Befestigung und Austausch der Gleitschienen im Vergleich zur vorbekannten Technologie deutlich reduziert werden.

Um ein seitliches Verrutschen auf den Querträgern zu verhindern, sind vorzugsweise auf den Querträgern Nippel angebracht, die die Gleitschienen seitlich fixieren. Alternativ können die Gleitschienen auch mittels Abstandshalter gegen seitliches Verrutschen auf den Querträgern gesichert sein. Auch auf die Querträger aufgeschweißte Bolzen oder Bleche sind zur seitlichen Fixierung denkbar.

Die Querträger können beispielsweise als Rundprofile ausgebildet sein, wobei aber auch andere, an spezielle Lebensmittelfroster angepasste, Profilformen möglich sind.

Die Erfindung eignet sich zum Einsatz bei allen denkbaren Einrichtungen zur Behandlung von Lebensmitteln, bei denen die Lebensmittel auf einem Transportband durch eine Behandlungszone gefördert werden. Ganz besonders interessant ist die Erfindung für die Anwendung bei Lebensmittelfrostern. Insbesondere bei Tunnelfrostern kommen die mit der Erfindung erzielten Vorteile zum Tragen.

Die wesentlichen Vorteile der Erfindung bestehen darin, dass weniger Spalte als bei vorbekannter Technologie auftreten, wodurch der Hygienestandard deutlich verbessert wird. Außerdem bietet die erfindungsgemäße Lösung eine einfachere und schnellere Montage, einen leichteren Austausch und eine kostengünstigere Reparatur. Austausch und Reparatur sind möglich, ohne das Transportband zu demontieren. Generell sind weniger Bauteile am Bandtragegestell erforderlich.

Im Folgenden soll die Erfindung anhand eines in den Figuren schematisch dargestellten Ausführungsbeispiels im Vergleich zum Stand der Technik näher erläutert werden:

Es zeigen
Figur 1 eine Detailansicht einer auf einen Stahlträger aufgeschobenen Gleitschiene
Figur 2 ein mit Gleitschienen ausgestattetes Tragegestell für ein Transportband.
Figur 3 Detailansichten der Gleitschienenmontage

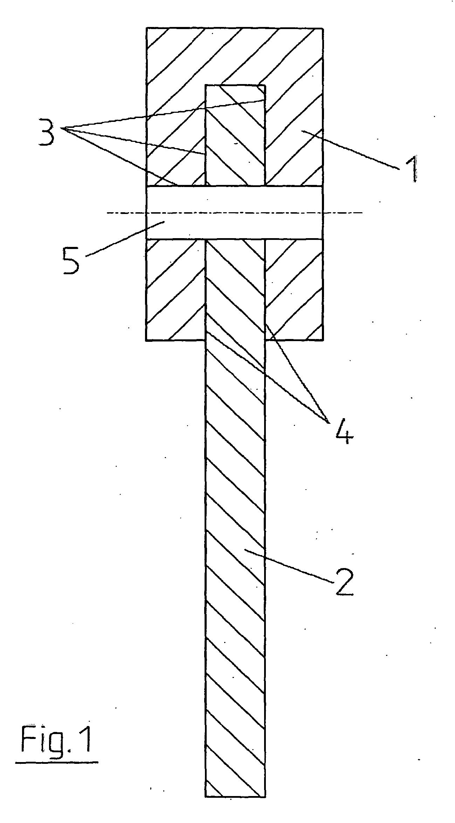

Figur 1 betrifft eine Anordnung, wie sie bei bisherigen Tunnelfrostern zum Gefrieren von Lebensmitteln eingesetzt wird. Dabei wird eine Gleitschiene 1 auf einen Stahlträger 2 aufgeschoben. Zwischen Gleitschiene 1 und Stahlträger 2 entstehen Spalte 3 und 4, welche beim Einsatz in der Lebensmitteltechnik hygienische Probleme mit sich bringen. Mittels eines Bolzens 5 ist die Gleitschiene 1 auf dem Stahlträger 2 fixiert.

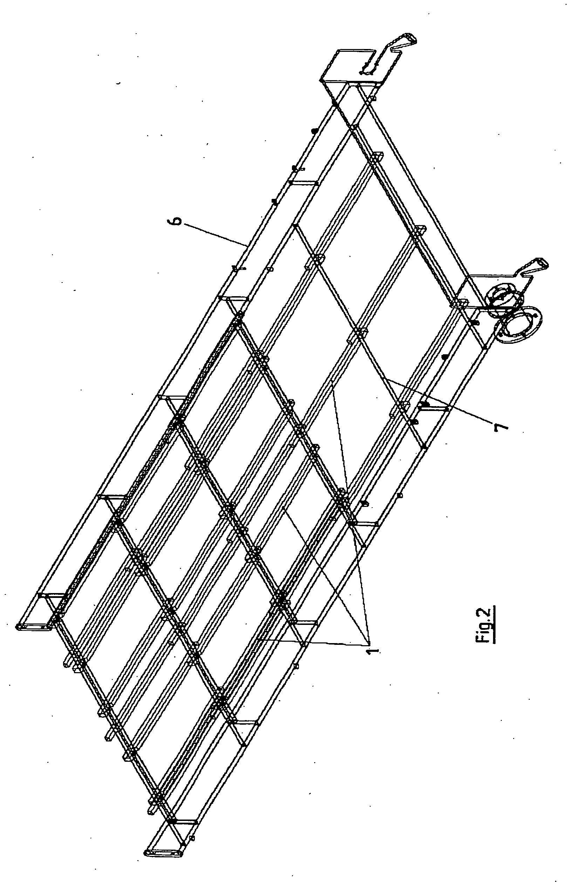

In Figur 2 ist ein gesamtes Tragegestell 6 dargestellt, wie es gemäß der Erfindung für Tunnelfroster vorgesehen ist. Das Tragegestell 6 besteht beispielsweise aus Metall und weist Querträger 7 auf. Auf dem Querträger 7 sind selbsttragende Gleitschienen 1 aufgelegt. Über die Gleitschienen 1 wird beim Betrieb des Tunnelfrosters das Transportband, welches in der Figur nicht dargestellt ist, geführt.

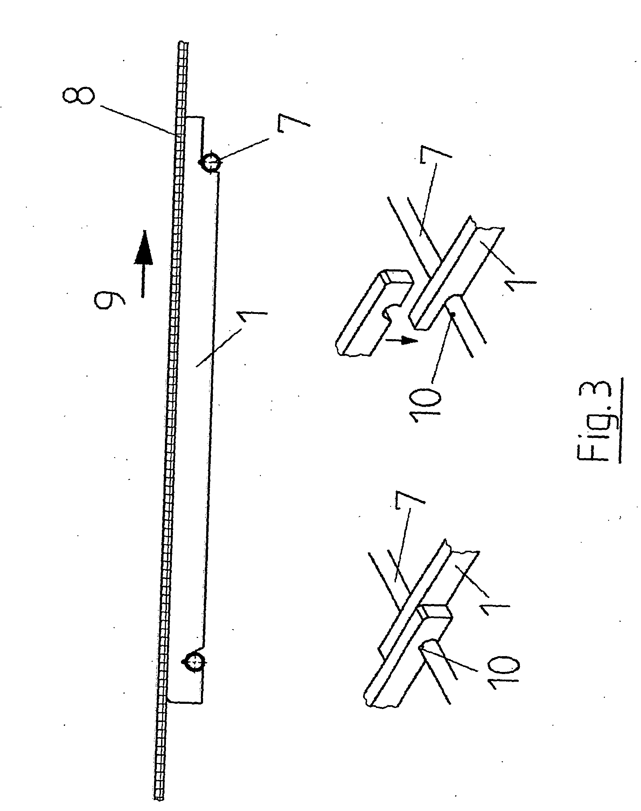

Im oberen Teil der Figur 3 ist ein Transportband 8 gezeigt, welches auf einer Gleitschiene 1 geführt wird. Die Gleitschiene 1 ist beispielsweise als selbsttragendes Kunststoffteil ausgebildet, welches auf Querträgern 7 aufliegt. Zur Kompensation von unterschiedlichen Wärmedehnungen sind die Gleitschienen 1, wie im oberen Teil der Figur dargestellt, als Fest- und Loslagerkonstruktion ausgeführt. Im unteren Teil der Figur 3 ist gezeigt, wie die Gleitschienen 1 auf dem Querträger 7 montiert werden. Die Gleitschienen 1 weisen Aussparungen für die Querträger 7 auf und liegen einfach auf den Querträgern 7 auf. Auf den Querträgern 7 sind Nippel 10 angebracht, die ein seitliches Verrutschen der Gleitschienen 1 verhindern sollen.

## Patentansprüche

1. Vorrichtung zur Behandlung von Lebensmitteln mit einer Behandlungszone, in der ein Transportband (8) zum Fördern der Lebensmittel durch die Behandlungszone angeordnet ist, wobei das Transportband durch ein Gestell (6) unterstützt ist und auf dem Gestell (6) aus reibungsarmem Kunststoff bestehende Gleitschienen (1) angebracht sind, über die das Transportband geführt ist, **dadurch gekennzeichnet, dass** die Gleitschienen (1) als selbsttragende gerade Balken ausgebildet und in Fest- und Loslagerkonstruktion auf dem Gestell angebracht sind, wobei sie Aussparungen für Querträger (7), aufweisen, und die Aussparungen auf den Querträgern aufliegen.

2. Vorrichtung nach Anspruch 1, **dadurch gekennzeichnet, dass** die Gleitschienen mittels Nippeln, Abstandshalter, oder aufgeschweißten Bolzen oder Blechen gegen seitliches Verrutschen auf den Querträgern gesichert sind.

3. Vorrichtung nach einem der Ansprüche 1 oder 2, **dadurch gekennzeichnet, dass** die Behandlungszone als Lebensmittelfroster ausgebildet ist.

4. Vorrichtung nach Anspruch 3, **dadurch gekennzeichnet, dass** die Behandlungszone als Tunnelfroster ausgebildet ist.

## Claims

1. Device for the treatment of foodstuffs having a treatment zone, in which a conveyor belt (8) for conveying the foodstuffs through the treatment zone is arranged, wherein the conveyor belt is supported by a frame (6) and sliding rails (1) consisting of low-friction plastic, over which the conveyor belt is led, are mounted on the frame (6), **characterized in that** the sliding rails (1) are formed as straight self-supporting beams and are mounted on the frame in a construction comprising fixed and movable bearings, having clearances for transverse beams (7) and the clearances resting on the transverse beams.

2. Device according to Claim 1, **characterized in that** the sliding rails are secured against lateral slipping on the transverse beams by means of nipples, spacers or welded-on bolts or sheets.

3. Device according to either of Claims 1 and 2, **characterized in that** the treatment zone is formed as a foodstuff freezing system.

4. Device according to Claim 3, **characterized in that** the treatment zone is formed as a freezing tunnel.

## Revendications

1. Dispositif pour la préparation de produits alimentaires avec une zone de préparation dans laquelle un convoyeur (8) est disposé pour convoyer les produits alimentaires à travers la zone de préparation, le convoyeur étant soutenu par un châssis (6) et des rails de glissement (1) en matière synthétique à faible frottement étant disposés sur le châssis (6), le convoyeur étant guidé sur ces rails, **caractérisé en ce que** les rails de glissement (1) prennent la forme de barres droites autoporteuses et qu'ils sont disposés sur le châssis selon une construction de palier fixe et de palier libre, lesdits rails comportant des évidements pour les traverses (7) et les évidements reposant sur les traverses.

2. Dispositif selon la revendication 1, **caractérisé en ce que** les rails de glissement (1) sont fixés à l'aide de raccords filetés, d'entretoises ou de boulons ou de tôles soudés dessus pour éviter tout glissement latéral sur les traverses.

3. Dispositif selon l'une quelconque des revendications 1 ou 2, **caractérisé en ce que** la zone de préparation prend la forme d'un congélateur de produits alimentaires.

4. Dispositif selon la revendication 3, **caractérisé en ce que** la zone de préparation prend la forme d'un congélateur en tunnel.
